# EUROPEAN PATENT APPLICATION

(11) **EP 2 675 214 A1**
(43) Date of publication of application: **18.12.2013**
(21) Application number: 11858353.3
(22) Date of filing: 27.12.2011
(51) Int. Cl.: H04W 36/00, H04W 48/18

(54) **COMMUNICATION CONTROL DEVICE AND COMMUNICATION CONTROL METHOD**

(30) Priority: 08.02.2011 JP 2011025321
(71) Applicant: NTT DOCOMO, INC., Chiyoda-ku Tokyo 100-6150 (JP)
(72) Inventor: AOYAGI, Kenichiro, Tokyo 100-6150 (JP); WATANABE, Yasuyuki, Tokyo 100-6150 (JP); MATSUTANI, Hideyuki, Tokyo 100-6150 (JP); SUGANO, Kiminobu, Tokyo 100-6150 (JP); NAKAMURA, Yuichiro, Tokyo 100-6150 (JP)
(74) Representative: HOFFMANN EITLE
(86) International application number: PCT/JP2011/080194
(87) International publication number: WO 2012/108111

(57) **Abstract**

An RNC 200 includes a cell information acquisition unit 201 configured to acquire cell information of a first cell and a second cell, a threshold determination unit 203 configured to determine, based on the acquired cell information, a cell reselection threshold which causes the mobile station to reselect the second cell in place of the first cell and to camp on the second cell, and a camp on cell instruction unit 205 configured to broadcast, to the mobile station, system information in which the determined cell reselection threshold or a camp on frequency determined based on the cell reselection threshold is set.

## Description

### TECHNICAL FIELD

The present invention relates to a communication controller and a communication control method, for controlling a mobile station capable of executing radio communications with cells which are formed by a plurality of radio communication systems using different radio access technologies.

### BACKGROUND ART

As for a mobile station capable of connecting with a plurality of radio communication systems using different radio access technologies (RAT), such as a 3G (Wideband-CDMA) system (hereinafter, 3G) and a Long Term Evolution system (hereinafter, LTE), various methods such as a handover (Inter-RAT Handover) are specified as a transition procedure between the plurality of radio communication systems (for example, Non-patent document 1).

### PRIOR ART DOCUMENT

### PATENT DOCUMENT

Non-patent document 1: 3GPP TS 25.331, Technical Specification Group Radio Access Network; Radio Resource Control (RRC) ; Protocol specification Section 8.3.6 Inter-RAT handover to UTRAN

### SUMMARY OF THE INVENTION

When a 3G and an LTE are deployed together in a frequency band (e.g. , 2 GHz) in the same area, a large number of 3G cells have often been already deployed to be overlapped with one another over a plurality of frequencies in a high-traffic area such as an urban area in order to secure required communications traffic. This causes a need to replace any of the frequencies which are used for the 3G with one for the LTE. For this reason, in a process of developing the LTE area, an event in which the LTE cell and the 3G cell are adjacent to each other with the same frequency may be caused.

If the LTE cell and the 3G cell are adjacently deployed with the same frequency as described above, the 3G cell and the LTE cell interfere with each other. Thus, for example, in the LTE cell, this interference sometimes creates an area which satisfies a communication-capable cell quality of a mobile station in the LTE cell, but does not satisfy a "camp on cell quality" determining whether or not camping on is performed, in the LTE cell. In other words, this interference causes a phenomenon in which the cell quality for camping on is not satisfied whereas the cell quality for communication is satisfied.

On the other hand, in the above-described area, the mobile station can execute communications with the LTE cell when satisfying the "communication-capable cell quality" determining whether or not communications with the LTE cell can be executed.

In this case, it is preferable that communications by the LTE whose communication speed is higher be executed by the mobile station. However, there is a problem that the mobile station cannot camp on the LTE cell, and thus cannot start the communications by the LTE.

Accordingly, the present invention has been made in consideration of the above circumstances. An objective of the present invention is to provide a communication controller and a communication control method, which cause a mobile station to execute communications via a desired radio communication system when cells, which have the same frequency band, of a plurality of radio communication systems using different radio access technologies are deployed to be overlapped with each other.

A first feature of the present invention is summarized as a communication controller (RNC 200) for controlling a mobile station (e.g., a mobile station 300A) capable of executing radio communications with a first cell (a cell C1) using a first radio access technology (LTE) and a second cell (a cell C2) using a second radio access technology (3G), the communication controller comprising: a cell information acquisition unit (a cell information acquisition unit 201) configured to acquire cell information including the frequency which is used by the first cell and the second cell and whether or not the first cell and the second cell are deployed in such a way as to be overlapped with each other; a threshold determination unit (a threshold determination unit 203) configured to determine, based on the cell information acquired by the cell information acquisition unit, a cell reselection threshold (Sintersearch, Threshserving, Threshlow) which causes the mobile station to reselect the second cell in place of the first cell and to camp on the second cell (execute CELL RESELECTION); and a camp on cell instruction unit (a camp on cell instruction unit 205) configured to broadcast, to the mobile station, system information in which the cell reselection threshold determined by the above or a camp on frequency determined based on the cell reselection threshold is set.

In the first feature of the present invention, when the mobile station camps on a third cell (a cell C3) using a frequency band different from the frequency band which is used by the first cell and the second cell, the camp on cell instruction unit may broadcast, to the mobile station, system information in which a cell reselection threshold which causes the mobile station to reselect the first cell and to camp on the first cell or a camp on frequency determined based on the cell reselection threshold is set.

In the first feature of the present invention, the camp on cell instruction unit may broadcast, to the mobile station, system information in which a camp on instruction indicating a frequency band which is used in the second cell or a predetermined frequency is set when the mobile station terminates the communication.

In the first feature of the present invention, the camp on cell instruction unit may transmit the camp on instruction based on a predetermined capability of the mobile station or a camp on priority for each frequency, and on a predetermined determination condition.

In the first feature of the present invention, when the cell information acquisition unit detects an existence of an area which does not satisfy a camp on cell quality required for the mobile station to camp on the first cell but satisfies a communication-capable cell quality required for the mobile station to execute communications with the first cell, the camp on cell instruction unit transmits, to the mobile station, the cell reselection threshold to cause the camp on the second cell in the area, or the camp on cell instruction unit transmits, to the mobile station, a camp on instruction which sets the second cell in the mobile station or causes the mobile station to camp on the second cell, the second cell being configured to allow transition from the first cell to which the system information in which the camp on frequency is set is broadcasted.

The first feature of the present invention may comprise a transition instruction unit configured to transmit, to the mobile station, a transition instruction which causes the mobile station to perform transition from the second cell to the first cell and causes the mobile station and the first cell to start communications when the camp on cell instruction unit broadcasts system information in which a cell reselection threshold to cause camp on the second cell or the camp on frequency is set.

A second feature of the present invention is summarized as a communication control method for controlling a mobile station capable of executing radio communications with a first cell using a first radio access technology and a second cell using a second radio access technology, the communication control method comprising the steps of: acquiring cell information including a frequency which is used by the first cell and the second cell and whether or not the first cell and the second cell are deployed in such a way as to be overlapped with each other; determining, based on the acquired cell information, a cell reselection threshold which causes the mobile station to reselect the second cell in place of the first cell and to camp on the second cell; broadcasting, to the mobile station, system information in which the mobile station reselects the second cell by the determined cell reselection threshold or a camp on frequency or a camp on frequency determined based on the cell reselection threshold is set; and causing the mobile station to switch a camp on cell from the first cell to the second cell based on the received system information.

The second feature of the present invention may further comprise the steps of: transmitting, to the mobile station, a transition instruction which causes the mobile station to perform transition from the second cell to the first cell and causes the mobile station and the first cell to start communications; and causing the mobile station to perform transition from the second cell to the first cell based on the received transition instruction.

### BRIEF DESCRIPTION OF THE DRAWINGS

[Fig. 1] Fig. 1 is an overall schematic configuration diagram of a radio communication system according to an embodiment of the present invention.
[Fig. 2] Fig. 2 is a functional block configuration diagram of a RNC 200 according to the embodiment of the present invention.
[Fig. 3] Fig. 3 is a functional block configuration diagram of a mobile station 300A according to the embodiment of the present invention.
[Fig. 4] Fig. 4 is a drawing showing a communication sequence executing a radio communication in the LTE in such a manner that the mobile station 300A according to the embodiment of the present invention switches a camp on cell.

### MODE FOR CARRYING OUT THE INVENTION

Hereinafter, an embodiment of the present invention is described. Note that in the following description of the drawings, same or similar reference signs denote same or similar portions. However, it should be noted that the drawings are schematic and ratios of dimensions and the like are different from actual ones.

Therefore, specific dimensions and the like should be determined in consideration of the following description. Moreover, the drawings also include portions having different dimensional relationships and ratios from each other.

### (1) Overall Schematic Configuration of Radio Communication System

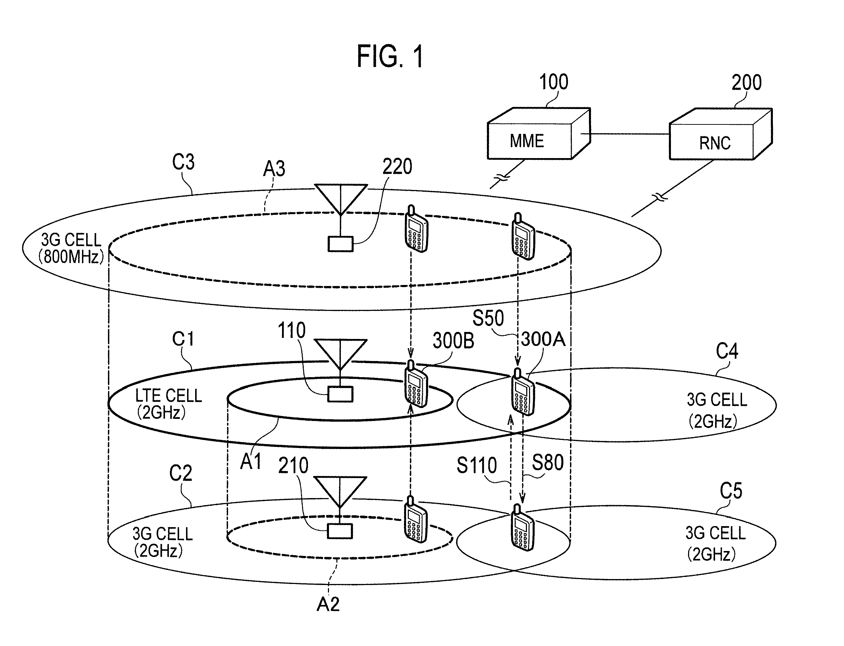

Fig. 1 is an overall schematic configuration diagram of a radio communication system according to the present embodiment. As shown in Fig. 1, a radio communication system according to the embodiment includes a radio communication system conforming to the LTE (Long Term Evolution) and a radio communication system conforming to the 3G (Wideband-CDMA), and cells of the both radio communication systems are deployed in such a way as to be overlapped with each other in the same area.

The radio communication system conforming to the LTE includes an MME 100 and an eNodeB 110. The eNodeB 110 forms a cell C1 (a first cell) using an LTE (a first radio access technology) scheme. The MME 100 controls the eNodeB 110 and the mobile stations 300A, 300B present in the cell C1.

The radio communication system conforming to the 3G includes a NodeB 210, a NodeB 220, and a RNC 200. The NodeB 210 forms a cell C2 (a second cell) using a 3G (a second radio access technology) scheme. Similarly, the NodeB 220 forms a cell C3 (a third cell). The RNC 200 (Radio Network Controller) controls the mobile stations 300A, 300B present in the cells C2 to C5.

In the cells C1, C2, C4, and C5, a frequency band of 2 GHz band is used. On the other hand, in the cell C3, a frequency band of 800 MHz band is used. In the present embodiment, the cells C1 to C3 are formed in such a way as to be geographically overlapped with one another. Specifically, the cell C1 and the cell C2 roughly have the same size and are formed in such a way as to be overlapped with each other in the same area. Areas A1, A2 which satisfy a camp on cell quality of the mobile stations 300A, 300B are also formed in such a way as to be overlapped with each other. Furthermore, an area A3 which satisfies a camp on cell quality in the cell C3 roughly has the same size as that of the cell C1 or the cell C2 and is formed in such a way as to be overlapped in the same area.

Also, the cell C4 which is a 3G cell being overlapped with the cell C1 is formed and a cell C5 which is a 3G cell being overlapped with the cell C2 is formed.

The mobile station 300A and the mobile station 300B are terminals capable of executing radio communications with the cells C1 to C5. In the present embodiment, the mobile station 300A is located in an area in which the cell C1 and the cell C4 are overlapped with each other. On the other hand, the mobile station 300B is located in the area A1, which satisfies the camp on cell quality, in the cell C1.

### (2) Functional Block Configuration of Radio Communication System

Hereinafter, a functional block configuration of the radio communication system according to the embodiment is described. Specifically, the functional block configurations of the RNC 200 and the mobile station 300A are described.

### (2.1) RNC 200

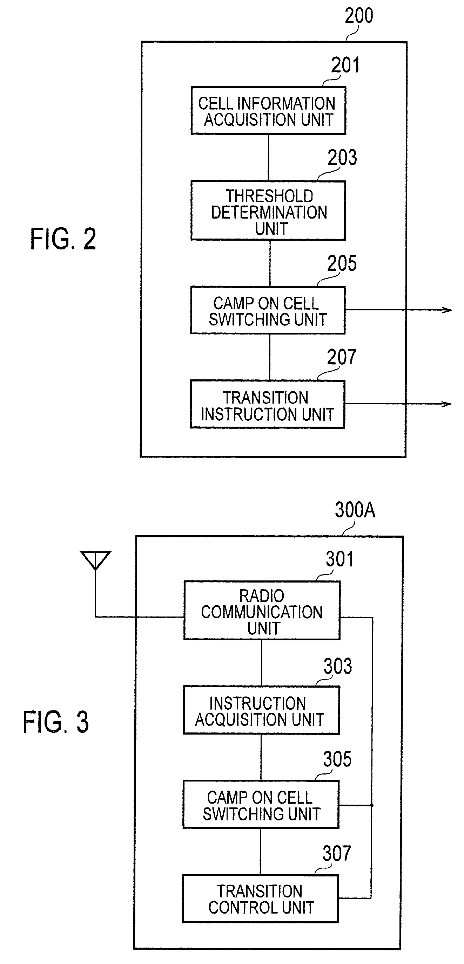

Fig. 2 is a functional block configuration diagram of the RNC 200. As shown in Fig. 2, the RNC 200 includes a cell information acquisition unit 201, a threshold determination unit 203, a camp on cell instruction unit 205, and a transition instruction unit 207.

The cell information acquisition unit 201 acquires information regarding the cells C2, C3 and the cells C4, C5, which are formed by the NodeBs 210, 220. Also, the cell information acquisition unit 201 acquires information regarding the cell C1 which is an adjacent cell to the cells and uses the LTE scheme.

Specifically, the cell information acquisition unit 201 acquires cell information including the frequencies which are used by the cells C1 to C5 (800 MHz band, 2 GHz band) and whether or not the cells C1 to C5 are deployed in such a way as to be overlapped with one another. The cell information is included in system information which is broadcasted according to SYSTEM INFORMATION BLOCK TYPE 19 (TS 25.331). Also, the system information includes a threshold (ThreshXHigh) for satisfying the camp on cell quality (Qqualmin) required for the mobile station 300A performing the camping on the cell C1.

Based on a reception quality (e.g., a reception power level) of the mobile station 300A in the cell C1, the cell information acquisition unit 201 detects an existence of an area in the cell C1, the area which satisfies the camp on cell quality (Qqualmin) required for the mobile station 300A to perform the camping on but does not satisfy a communication-capable cell quality (Qqual) required for the mobile station 300A to execute the communication with the C1.

Note that, for executing the detection, if the cell information acquisition unit 201 has acquired measurement results of the reception quality from the mobile stations 300A, 300B, and positional information of the mobile stations 300A, 300B (or pseudo positional information obtained based on propagation delay of radio signals), the cell information acquisition unit 201 may record the existence of the area which does not satisfy the camp on cell quality but satisfies the communication-capable cell quality in the cell C1, according to a predetermined determination logic (e.g. , camp on priority for each frequency).

Based on the cell information acquired by the cell information acquisition unit 201, the threshold determination unit 203 determines a cell reselection threshold which causes the mobile station 300A (300B) to reselect another adjacent cell in place of the current cell which the mobile station 300A (300B) camps on and to camp on the second cell. For example, the threshold determination unit 203 determines a cell reselection threshold which causes the mobile station 300A to reselect the cell C2 in place of the cell C1.

Specifically, the threshold determination unit 203 determines the communication-capable cell quality (Qqual) as the cell reselection threshold (Sintersearch, Threshserving, Threshlow). With this, the threshold determination unit 203 can cause the mobile station 300A to execute CELL RESELECTION reselecting the cell C2 when the mobile station 300A (300B) is located in the area which does not satisfy the camp on cell quality (Qqualmin) but satisfies the communication-capable cell quality (Qqual).

The camp on cell instruction unit 205 broadcasts system information in which the cell reselection threshold (Sintersearch, Threshserving, Threshlow) determined by the threshold determination unit 203 is set to the mobile station 300A. Alternatively, the camp on cell instruction unit 205 broadcasts the system information in which a camp on frequency determined based on the cell reselection threshold is set to the mobile station 300A. For example, when it is determined based on the cell reselection threshold that the mobile station 300A is caused to reselect the cell C2, the camp on cell instruction unit 205 broadcasts the system information in which the camp on cell frequency and the cell reselection threshold for the cell C2 are set to the mobile station 300A.

Specifically, the camp on cell instruction unit 205 broadcasts SYSTEM INFORMATION BLOCK TYPE 19 (TS 25.331) in which the cell reselection threshold (Sintersearch, Threshserving, Threshlow) which causes the mobile station 300A to reselect the cell C2 is set to the mobile station 300A, for causing the mobile 300A to camp on the cell C2. Alternatively, the camp on cell instruction unit 205 broadcasts the SYSTEM INFORMATION in which the camp on frequency is set to the mobile station 300A.

In addition, the camp on cell instruction unit 205 can broadcast, to the mobile station 300A, system information in which the cell reselection threshold which causes the mobile station 300A to reselect the cell C1 and to camp on the cell C1 is set, if the mobile station 300A (300B) camps on the cell C3 (the third cell) using the frequency band (800 MHz band) different from the frequency band (2 GHz band) which is used in the cell C1 and the cell C2. Alternatively, the camp on cell instruction unit 205 broadcasts, to the mobile station 300A, the system information in which a camp on frequency determined based on the cell reselection threshold is set. The mobile station 300A having received such system information reselects the cell C1 based on the cell reselection threshold (or the camp on frequency), thereby being capable of reselecting the cell C2 by the cell reselection to be performed thereafter.

Note that, when the mobile station 300A is located in the area which does not satisfy the camp on cell quality (Qqualmin) but satisfies the communication-capable cell quality (Qqual), the camp on cell instruction unit 205 can also transmit a camp on instruction (RRC CONNECTION RELEASE) indicating the frequency band which is used in the cell C2 or a predetermined frequency (Redirection info) to the mobile station 300A when the mobile station 300A terminates the communication. Specifically, the Redirection info is expressed as an information element (IE) of the RRC CONNECTION RELEASE.

The camp on cell instruction unit 205 can transmit the camp on instruction to the mobile station 300A and set the Redirection info in the mobile station 300A based on a predetermined capability of the mobile station 300A (300B) in the cell C1 or a camp on priority for each frequency in the cell C1, and on a predetermined determination condition. For example, in case of handling a mobile station without a handover (PS handover) capability in the direction from the 3G to the LTE (i.e., a mobile station has no chance of transition to the LTE when communicating in the 3G) or a mobile station which is managed to preferentially camp on the LTE frequency, camp on cell instruction unit 205 is considered to transmit the camp on instruction. Note that a mobile station which is managed to preferentially camp on the 3G frequency is originally camps on the cell C2, and thus does not require the above-described cell reselection.

Also, when the cell information acquisition unit 201 detects that an existence of an area which does not satisfy the camp on cell quality (Qqualmin) but satisfies the communication-capable cell quality (Qqual) for the mobile station 300A, the camp on cell instruction unit 205 can transmit a camp on instruction (RRC CONNECTION RELEASE) which sets the cell 2 in the mobile station 300A in the area or causes the mobile station 300A to camp on the cell 2, to the mobile station 300A. In other words, the cell C2 is a cell which is configured to cause the mobile station 300A to be capable of performing the transition to the cell C2 with the CELL RESELECTION based on the cell reselection threshold which is set in the system information from the cell C1 or camping on the cell C2 based on the camp on instruction.

Furthermore, in the case of the area which satisfies the camp on cell quality, the camp on cell instruction unit 205 may broadcast, to the mobile station 300A (300B), system information instructing that CELL RESELECTION to another cell or the frequency set in the other cell is not activated. Specifically, the camp on cell instruction unit 205 broadcasts system information to a mobile station which is located in the area satisfying the camp on cell quality as the mobile station 300B shown in Fig. 1, the system information in which the cell reselection threshold is set so as not to activate the CELL RESELECTION.

After the system information in which a cell reselection threshold causing camp on the cell C2, for example, or a camp on frequency determined based on the cell reselection threshold is set is broadcasted by the camp on cell instruction unit 205 to the mobile station 300A (300B), the transition instruction unit 207 transmits a transition instruction which causes the mobile station 300A to perform transition from the cell C2 to the cell C1 and causes the mobile station 300A and the cell C1 to start communications to the mobile station 300A.

Specifically, the transition instruction unit 207 transmits a transition instruction according to the Redirection info to the mobile station 300A. Note that the transition instruction unit 207 can use a procedure based on the Redirection info in which the frequency of the cell C1 is set in RRC CONNECTION REJECT or RRC CONNECTION RELEASE as the Redirection info which is specified in the 3GPP TS25.331. Alternatively, the transition instruction unit 207 can also use the PS-Handover procedure.

### (2.2) Mobile station 300A

Fig. 3 is a functional block configuration diagram of the mobile station 300A. Note that the mobile station 300B also has the same configuration. As shown in Fig. 3, the mobile station 300A includes a radio communication unit 301, an instruction acquisition unit 303, a camp on cell switching unit 305, and a transition control unit 307.

The radio communication unit 301 executes radio communications conforming to the 3G scheme or the LTE scheme with the eNodeB 110 and NodeBs 210, 220.

The instruction acquisition unit 303 acquires SYSTEM INFORMATION BLOCK TYPE 19 (TS 25.331) which is system information in which the cell reselection threshold (Sintersearch, Threshserving, Threshlow) is set and is broadcasted from the RNC 200. Specifically, the instruction acquisition unit 303 acquires the cell reselection threshold (Sintersearch, Threshserving, Threshlow) included in the SYSTEM INFORMATION received by the radio communication unit 301.

Also, the instruction acquisition unit 303 acquires a transition instruction (Redirection info) transmitted from the RNC 200. Specifically, the instruction acquisition unit 303 acquires a field Redirection info in the RRC CONNECTION REJECT or RRC CONNECTION RELEASE which is received by the radio communication unit 301.

The camp on cell switching unit 305 switches a camp on cell based on the cell reselection threshold notified from the instruction acquisition unit 303. For example, the camp on cell switching unit 305 activates CELL RESELECTION for switching the camp on cell from the cell C1 to the cell C2 based on the cell reselection threshold when the mobile station 300A is located in a predetermined area of the cell C1 (an area in which the cell C1 and the cell C4 are overlapped with each other).

The transition control unit 307 switches a communication executing cell based on a transition target cell and the frequency of the cell, which are included in the Redirection info notified from the instruction acquisition unit 303. For example, the transition control unit 307 executes transition (redirection) from the cell C2 to the cell C1 when the mobile station 300A is located in the predetermined area of the cell C1 (the area in which the cell C1 and the cell C2 are overlapped with each other) and camps on the cell C2.

Note that as described above, the transition control unit 307 may use the procedure by Fast Redirection or Release with Redirection or may use the procedure by PS-Handover.

### (3) Operation of Radio Communication System

Hereinafter, an operation of the above-described radio communication system is described. Specifically, described is an operation in which the mobile station 300A switches the camp on cell to execute radio communications in the LTE.

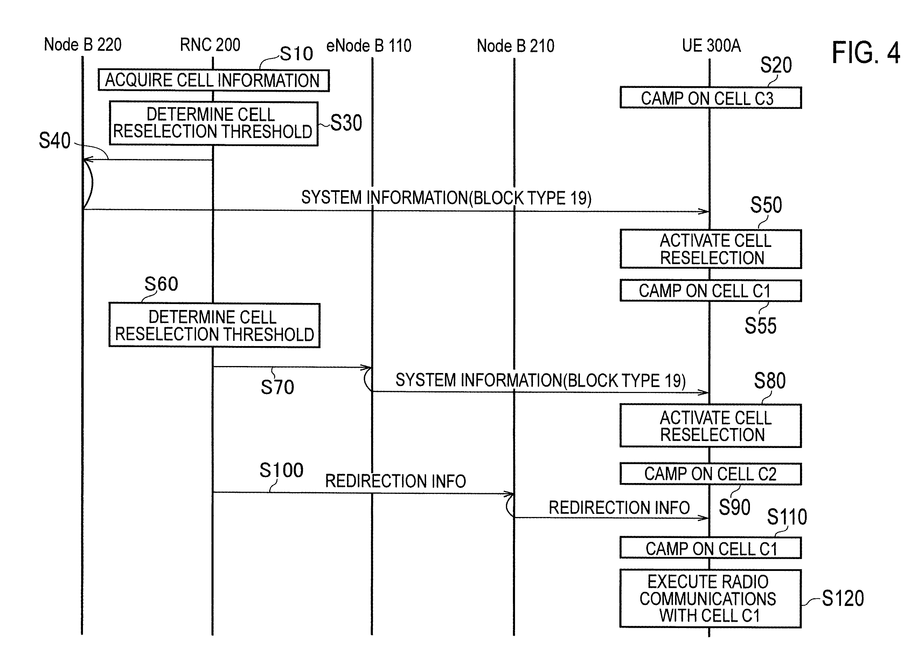

Fig. 4 shows a communication sequence in which the mobile station 300A switches the camp on cell to execute radio communications in the LTE.

As shown in Fig. 4, the RNC 200 acquires information on the cells C1 to C5. In particular, in the present embodiment, the RNC 200 acquires information on the cells C1 to C3 (S10). Specifically, the RNC 200 acquires information (a using frequency and the like) on the cell which is included in the SYSTEM INFORMATION BLOCK TYPE 19. In addition, as shown in Fig. 1, the mobile stations 300A, 300B (UEs) camp on the cell C3 (S20).

The mobile station 300A is located in the area which does not satisfy the camp on cell quality (Qqualmin) but satisfies the communication-capable cell quality (Qqual) in the cell C1, for example. The area is formed in such a manner that the cells C1 to C5 are overlapped with one another and, thus, easily causes interference among the cells. On the other hand, the mobile station 300B is located in the area which satisfies the camp on cell quality in the cell 1, for example, and, thus, can camp on the cells C1 to C3 and perform radio communications with the cells.

In addition, the SYSTEM INFORMATION BLOCK TYPE 19 is configured such that in order for the mobile station 300A which camps on the 3G cells (the cells C2 to C5) to camp on the LTE cell (the cell C1), the mobile stations 300A, 300B preferentially execute CELL RESELECTION to the set frequency in the LTE cell.

Based on the acquired cell information, the RNC 200 determines a cell reselection threshold (Sintersearch, Threshserving, Threshlow) to cause the mobile station 300A to reselect another adjacent cell in place of the cell C3 in which the mobile station 300A camps on (S30).

The RNC 200 broadcasts system information (SYSTEM INFORMATION BLOCK TYPE 19) in which the determined cell reselection threshold is set to the mobile station 300A (S40) . Note that the RNC 200 may broadcast, to the mobile station 300, system information in which a camp on frequency determined based on the cell reselection threshold is set in place of the cell reselection threshold.

The mobile station 300A activates CELL RESELECTION for selecting the camp on cell from the cell C3 to the cell C1 based on the received SYSTEM INFORMATION (S50). As a result, the mobile station 300A is caused to camp on the cell C1 (S55).

As similar to step S30, based on the acquired cell information, the RNC 200 determines a cell reselection threshold (Sintersearch, Threshserving, Threshlow) to cause the mobile station 300A to reselect another adjacent cell in place of the cell C1 in which the mobile station 300A camps on (S60).

The RNC 200 broadcasts system information (SYSTEM INFORMATION BLOCK TYPE 19) in which the determined cell reselection threshold is set to the mobile station 300A (S70) . Note that the RNC 200 may broadcast, to the mobile station 300A, system information in which a camp on frequency determined based on the cell reselection threshold is set in place of the cell reselection threshold.

Here, in the system information of the cell C1 (the LTE cell, the 2 GHz band), in an area which may be determined by the mobile station 300A as an outside area of the cell C1 by an out-of-service determination threshold (Qrxlevimn/Qqualmin) of the cell C1, a threshold (Thresh serving Low) to activate CELL RESELECTION to the cell C2 is set. For this reason, the mobile station 300A determines that the mobile station 300A cannot camp on the cell C1 even in the area which satisfies the communication-capable cell quality.

Based on the received SYSTEM INFORMATION, the mobile station 300A activates CELL RESELECTION which switches the camp on cell from the cell C1 to the cell C2 (S80). As a result, the mobile station 300A is caused to camp on the cell C2 (S90).

After the camp on instruction to instruct camping on the cell C2 is transmitted to the mobile station 300A, the RNC 200 performs transition of the mobile station 300A from the cell C2 to the cell C1 and transmits a transition instruction (Redirection info) which causes the mobile station 300A and the cell C1 to start communications to the mobile station 300A (S100).

Based on the received transition instruction, the mobile station 300A executes transition (redirection) from the cell C2 to the cell C1, i.e., camps on the cell C1 without performing measurements and executes radio communications with the cell C1 (S110 to S120).

Note that when the mobile station 300A is to camp on the cell C1, the above-described processes at steps S20 to S50 are not necessary.

### (4) Operations and Effects

In the RNC 200 and the mobile station 300A according to the present embodiment, for example, a reselection threshold which reselects a cell C2 in place of a cell C1 and instructs to camp on the cell C2 is determined. Also, system information in which the determined cell reselection threshold or a camp on frequency determined based on the cell reselection threshold is set is broadcasted to the mobile station 300A. Accordingly, the mobile station 300A camps on the cell C2. Furthermore, after the camp on instruction is broadcasted to the mobile station 300A, a transition instruction (Redirection info) which causes the mobile station 300A to perform transition from the cell C2 to the cell C1 and causes the mobile station 300A and the cell C1 to start communications is transmitted to the mobile station 300A.

For this reason, when the mobile station 300A cannot camp on the cell C1 because the camp on cell quality is not satisfied, but when the communication-capable cell quality allowing the mobile station 300A to execute the communications with the cell C1 is satisfied, the mobile station 300A can execute radio communications with the cell C1, i.e., the cell conforming to the high-speed LTE scheme. In particular, even in the LTE priority area in which the LTE cell is preferentially selected, the mobile station 300A can be caused to camp on the 3G cell and radio communications with the LTE cell can be promptly started by the redirection from the 3G cell.

In the present embodiment, when the mobile station 300A camps on a cell C3 using a frequency band (800 MHz band) different from the frequency band (2 GHz band) which is used by the cell C1 and the cell C2, system information which instructs the mobile station 300A to camp on the cell C1 can be broadcasted to the mobile station 300A. For this reason, the mobile station 300A invariably camps on a cell having the same frequency band before the redirection is executed. Thus, a connection failure with a transition target cell, which is caused by executing the redirection to perform transition of the cell without performing any measurement, can be prevented from occurring.

In the present embodiment, when the mobile station 300A terminates the communication, the frequency band which is used by the cell C2 or the camp on instruction indicating the predetermined frequency (RRC CONNECTION RELEASE) can be transmitted to the mobile station 300A. For this reason, when the mobile station 300A restarts the communication in the location, even in the LTE priority area, there is no need to execute CELL RESELECTION again. Also, in the present embodiment, Redirection info can be set in the mobile station 300Abased on the predetermined capability of the mobile station 300A or the camp on priority for each frequency in the cell C1 and the predetermined determination condition. Accordingly, a camp on cell in which the mobile station 300A should camp on can be determined based on the capability of the mobile station 300A or the feature of the area in which the cell is formed.

In other words, accordingly to the RNC 200 and the mobile station 300A, when same frequency band cells of multiple radio communication systems using different radio access technologies are deployed in such a way as to be overlapped with each other, the mobile station 300A can be caused to execute communications via a desired radio communication system.

### (5) Other Embodiments

As described above, although the present invention has been disclosed through an embodiment of the invention, it should not be understood that the description and drawings which constitute one part of this disclosure limit the invention. Various alternative embodiments will be apparent for those who are in the art from this disclosure.

For example, in the above-described embodiment of the present invention, description is given to the example in the LTE priority cell in which the LTE cell is preferentially selected, but the present invention is similarly applicable to a case where the 3G cell is preferentially selected.

Also, in the above-described embodiment, when the mobile station 300A is located in the area which satisfies the communication-capable cell quality with the LTE cell, an LTE cell or 3G cell (2 GHz) may be designated by using a camp on frequency designation (RPLMN info/REDIRECTION info) which is made when the mobile station 300A terminates the communication.

The above-described embodiment is such that the RNC 200 transmits a camp on instruction and a transition instruction. However, the eNodeB 110 or MME 100 may transmit the instructions.

In the above-described embodiment, the description is given by only using the eNodeB 110 and NodeB as an example. However, the present invention is applicable to the configuration in which a Femtocell (Home eNodeB, Home NodeB) overlays on a regular cell.

In this manner, the present invention naturally includes various embodiments which are not described herein. Accordingly, the technical scope of the present invention is only defined by the invention specifying matters according to the scope of the invention which is apparent from the above description.

Note that the entire content of Japanese Patent Application Publication No. 2011-025321 (filed on February 8, 2011) is incorporated herein by reference.

### INDUSTRIAL APPLICABILITY

The feature of the present invention can provide a communication controller and a communication control method, which cause a mobile station to execute communications via a desired radio communication system when same frequency band cells of multiple radio communication systems using different radio access technologies are deployed in such a way as to be overlapped with each other.

### EXPLANATION OF THE REFERENCE NUMERALS

- 100: MME
- 110: eNodeB
- 200: RNC
- 201: cell information acquisition unit
- 203: threshold determination unit
- 205: camp on cell instruction unit
- 207: transition instruction unit
- 210, 220: NodeB
- 300A, 300B: mobile station
- 301: radio communication unit
- 303: instruction acquisition unit
- 305: camp on cell switching unit
- 307: transition control unit

## Claims

1. A communication controller for controlling a mobile station capable of executing radio communications with a first cell using a first radio access technology and a second cell using a second radio access technology, the communication controller comprising:
a cell information acquisition unit configured to acquire cell information including a frequency which is used by the first cell and the second cell and whether or not the first cell and the second cell are deployed in such a way as to be overlapped with each other;
a threshold determination unit configured to determine, based on the cell information acquired by the cell information acquisition unit, a cell reselection threshold which causes the mobile station to reselect the second cell in place of the first cell and to camp on the second cell; and
a camp on cell instruction unit configured to broadcast, to the mobile station, system information in which the cell reselection threshold determined by the threshold determination unit or a camp on frequency determined based on the cell reselection threshold is set.

2. The communication controller according to claim 1, wherein when the mobile station camps on a third cell using a frequency different from the frequency which is used by the first cell and the second cell, the camp on cell instruction unit broadcast, to the mobile station, system information in which a cell reselection threshold which causes the mobile station to reselect the first cell and to camp on the first cell or a camp on frequency determined based on the cell reselection threshold is set.

3. The communication controller according to claim 1, wherein the camp on cell instruction unit transmits a camp on instruction indicating a frequency band which is used in the second cell or a predetermined frequency to the mobile station when the mobile station terminates the communication.

4. The communication controller according to claim 3, wherein the camp on cell instruction unit transmits the camp on instruction based on a predetermined capability of the mobile station or a camp on priority for each frequency, and on a predetermined determination condition.

5. The communication controller according to claim 1, wherein when the cell information acquisition unit detects an existence of an area which does not satisfy a camp on cell quality required for the mobile station to camp on the first cell but satisfies a communication-capable cell quality required for the mobile station to execute communications with the first cell,
the camp on cell instruction unit transmits, to the mobile station, the cell reselection threshold to cause the camp on the second cell in the area, or
the camp on cell instruction unit transmits, to the mobile station, a camp on instruction which sets the second cell in the mobile station or causes the mobile station to camp on the second cell, the second cell being configured to allow transition from the first cell to which the system information in which the camp on frequency is set is transmitted.

6. The communication controller according to claim 5, comprising a transition instruction unit configured to transmit, to the mobile station, a transition instruction which causes the mobile station to perform transition from the second cell to the first cell and causes the mobile station and the first cell to start communications when the camp on cell instruction unit broadcasts system information in which a cell reselection threshold to cause camp on the second cell or the camp on frequency is set.

7. A communication control method for controlling a mobile station capable of executing radio communications with a first cell using a first radio access technology and a second cell using a second radio access technology, the communication control method comprising the steps of:
acquiring cell information including a frequency which is used by the first cell and the second cell and whether or not the first cell and the second cell are deployed in such a way as to be overlapped with each other;
determining, based on the acquired cell information, a cell reselection threshold which causes the mobile station to reselect the second cell in place of the first cell and to camp on the second cell;
broadcast, to the mobile station, system information in which the mobile station reselects the second cell by the determined cell reselection threshold or a camp on frequency or a camp on frequency determined based on the cell reselection threshold is set; and
causing the mobile station to camp on cell from the first cell to the second cell based on the received system information.

8. The communication control method according to claim 7, further comprising the steps of:
transmitting, to the mobile station, a transition instruction which causes the mobile station to perform transition from the second cell to the first cell and causes the mobile station and the first cell to start communications; and
causing the mobile station to perform transition from the second cell to the first cell based on the received transition instruction.
